# EUROPÄISCHE PATENTSCHRIFT

(11) **EP 3 041 596 B1**
(45) Veröffentlichungstag und Bekanntmachung des Hinweises auf die Patenterteilung: **18.09.2019**
(21) Anmeldenummer: 14761576.9
(22) Anmeldetag: 01.09.2014
(51) Int. Cl.: B01D 46/00, B01D 46/02

(54) **FILTER FÜR DIE INDUSTRIELLE ENTSTAUBUNG MIT DICHTBAND**
FILTER FOR INDUSTRIAL DUST REMOVAL HAVING A SEALING STRIP
FILTRE POUR LE DÉPOUSSIÉRAGE INDUSTRIEL AVEC BANDE D'ÉTANCHÉITÉ

(30) Priorität: 03.09.2013 DE 102013014648
(43) Veröffentlichungstag der Anmeldung: 13.07.2016
(73) Patentinhaber: BWF Tec GmbH & Co. KG, 89362 Offingen (DE)
(72) Erfinder: HILLIGARDT, Thomas, 89364 Rettenbach/ OT Harthausen (DE); FOCK, Georg, 89431 Bächingen (DE); SCHWAB, Eduard, 89312 Günzburg (DE)
(74) Vertreter: Bosch Jehle Patentanwaltsgesellschaft mbH
(86) Internationale Anmeldenummer: PCT/EP2014/002357
(87) Internationale Veröffentlichungsnummer: WO 2015/032478

(56) Entgegenhaltungen:
- WO-A1-2013/163495
- DE-A1-102010 061 464
- JP-A- 2001 009 224
- US-A- 5 156 661
- US-A- 5 205 938

## Beschreibung

Die vorliegende Erfindung betrifft einen Filter für die industrielle Entstaubung und ein Verfahren für die Herstellung eines Filters für die industrielle Entstaubung.

Filter für die industrielle Entstaubung dienen dazu, feinverteilte, feste Fremdbestandteile aus einem Gas abzuscheiden. Sie finden Anwendung in Anlagen aus den unterschiedlichsten Industriebereichen, beispielsweise Asphaltmischanlagen, Biomasseheizkraftwerken, Anlagen der Chemie- und Pharmaindustrie, in der Lebensmittelindustrie oder bei der thermischen Abfallbehandlung. In allen diesen industriellen Bereichen kommt es oft zu einer hohen Staubpartikelkonzentration. Die Industriestäube sind sehr vielfältig und weisen normalerweise eine Partikelgröße zwischen 0,1 bis 1000 µm auf. Für die Reinigung des Gasstromes von Staubpartikeln sind Staubfilter verantwortlich. Diese Filter kommen bei der industriellen Entstaubung in unterschiedlichen Formen zum Einsatz. Häufig werden sogenannte Filterschläuche verwendet, also Filter, die einen schlauchförmigen Filterkörper aufweisen. In der Entstaubungsanlage werden die Filterschläuche auf Stützkörbe aufgezogen, die die Filterschläuche stabilisieren und in Form halten. In der Entstaubungsanlage trennt der Filter die Rohgasseite von der Reingasseite, d.h. auf der einen Seite des Filters befindet sich Gas mit einer hohen Staubpartikelkonzentration, während die Staubpartikelkonzentration auf der anderen Seite des Filters deutlich niedriger ist. Im Idealfall sollte die Staubpartikelkonzentration auf der anderen Seite des Filters verschwindend oder nahezu verschwindend sein. Zur Entstaubung strömt das Gas also von der Rohgasseite durch den Filter auf die Reingasseite. Dabei soll möglichst der Großteil der Staubpartikeln an dem Filter abgeschieden werden.

Filter für die industrielle Entstaubung weisen daher in der Regel ein sehr feinporiges Filtermedium auf. Die erforderliche Größe der Poren hängt dabei von dem Einsatzgebiet des Filters ab. Je feiner die Stäube sind, die von dem Filter aufgefangen werden sollen, desto kleiner müssen die Poren sein. Daher ist es zum Erzielen einer bestimmten Filterleistung unbedingt erforderlich, dass der Filter keine unkontrollierten Undichtigkeiten aufweist.

Filter für die industrielle Entstaubung können aus unterschiedlichen Materialien bestehen. Meist umfassen sie ein Textilmaterial. Bei einem derartigen Textilmaterial kann es sich um ein Gewebe aus den unterschiedlichsten Fasern, beispielsweise Glasfasern, Polytetrafluorethylen(PTFE)-Fasern oder anderen polymeren Fasern handeln. Oft werden diese Gewebe mit polymeren Stapelfasern belegt, die vernadelt werden, so dass ein Filz entsteht. Auch diese polymeren Stapelfasern können aus verschiedenen Materialien bestehen, insbesondere aus PTFE. Ein typischer Filter für die industrielle Entstaubung enthält daher ein Stützgewebe, das ein- oder beidseitig eine Auflage aus aufgenadelten polymeren Stapelfasern trägt. Der Filter kann zudem eine Membran umfassen, die beispielsweise auf den Nadelfilz aufkaschiert ist. Bei der Membran kann es sich insbesondere um eine PTFE-Membran handeln. Ein weiteres Beispiel für einen typischen Filter für die industrielle Entstaubung ist ein Glasgewebe, das vorzugsweise - ggf. anteilig - mit einer Ausrüstung aus PTFE versehen ist und auf das eine PTFE-Membran aufkaschiert ist.

Als Ausgangsmaterial für einen Filter für die industrielle Entstaubung dient häufig ein flächiges Filtermedium, das meist in Form von Bahnenware vorliegt. Aus dieser Bahnenware wird durch Konfektionierung ein Filter für die industrielle Entstaubung hergestellt. Dazu werden aus der Bahnenware Stücke in der benötigten Form und Größe geschnitten, die dann in der gewünschten Form zusammengesetzt werden. Ein Filterschlauch beispielsweise, der eine zylindrische Form aufweist, wird typischerweise aus mindestens zwei Filterstücken zusammengesetzt. Der Filtermantel wird aus einem rechteckigen Filterstück geformt, von dem zwei einander gegenüberliegende Seiten an einer Fügestelle zusammengefügt werden. Ein kreisförmiges Filterstück dient dazu, den Zylinderboden zu verschließen. Dazu wird es mit dem ersten Filterstück verbunden.

Die Kreisform ist für den Boden nicht zwingend, es gibt auch flache Schläuche oder einfach am Boden abgenähte. Auch konische Schlauchformen sind möglich, mit einem Zuschnitt, der eher einer Trapezform entspricht.

In Abhängigkeit von dem Material der Bahnenware können unterschiedliche Verfahren verwendet werden, um bei der Konfektionierung die aus der Bahnenware erhaltenen Stücke des Filters beispeilsweise zu einem Filterschlauch zusammenzufügen. Weist die Bahnenware einen hohen Anteil an thermoplastischen Polymeren wie beispielsweise Polyester (PES) oder Polyphenylensulfid (PPS) auf, kann zumindest die Längsnaht des Filterschlauchs insbesondere mittels Heißluft, einem Heizkeil, oder Ultraschall geschweißt und damit partikeldicht ausgeführt werden. Bei nicht thermoplastisch fügbaren Materialen wie PTFE-Filzen oder Glasgeweben ist dies nicht möglich, so dass in der Regel auf einen Nähprozess zurückgegriffen wird.

Ein typischer Filterschlauch für die industrielle Entstaubung weist daher eine Vielzahl von Nähten auf. Jede dieser Nähte wiederum weist eine Vielzahl von Nadeldurchstichen auf, durch die ein Nähfaden geführt ist. Dies bringt die Gefahr mit sich, dass durch die Nadeldurchstiche Durchtrittskanäle für Partikeln, insbesondere für Feinpartikeln, ausgebildet werden, da der Nähfaden das Nahtloch nur teilweise innen ausfüllt und im Querschnitt abdeckt. Der Einsatz noch dünnerer Nadeln ist durch den Nähfaden und dessen auf Grund der Festigkeit notwendige Dicke begrenzt. Die Nadeldurchstiche können also unter Umständen mit hoher Wahrscheinlichkeit dazu führen, dass der Filter nachweisbar Undichtigkeiten aufweist, die sich nur schwer kontrollieren lassen.

Die Nadel und das Einstichloch haben also systembedingt grundsätzlich einen größeren Durchmesser als der Nähfaden Die US 5,156,661 und US 5,205,938 offenbaren zur Abdichtung der Filternaht ein thermoplastisches Dichtband. Die nachveröffentlichte WO2013/163495 offenbart ein Dichtband bestehend aus Polytetrafluorethylen und einem Kleber, bzw. ein Dichtband bestehend aus expandiertem Fluorpolymer zur Abdichtung der Naht eines Filterschlauches.

Der vorliegenden Erfindung liegt daher die Aufgabe zu Grunde, einen derartigen Filter für die industrielle Entstaubung dahingehend zu verbessern, dass die Gefahr eines Partikeldurchtritts durch die Nahtkanäle beseitigt wird.

Diese Aufgabe wird durch den erfindungsgemäßen Filter für die industrielle Entstaubung mit den Merkmalen gemäß Anspruch 1 gelöst. Vorteilhafte Weiterbildungen des erfindungsgemäßen Filters sind den Unteransprüchen 2-6 angegeben. In Anspruch 7 ist ein Verfahren zur Herstellung eines erfindungsgemäßen Filters für die industrielle Entstaubung angegeben.

Der erfindungsgemäße Filter für die industrielle Entstaubung weist einen aus einem flächigen Filtermedium gebildeten Filterkörper und ein Dichtband auf, wobei der Filterkörper einen Nahtbereich aufweist mit Durchtrittskanälen, durch die mindestens ein Nähfaden, also ein oder mehrere Nähfäden geführt sind, und wobei das Dichtband so auf dem Nahtbereich angeordnet und mit dem flächigen Filtermedium verbunden ist, dass ein Durchtritt von Partikeln durch die Durchtrittskanäle verhindert wird. Das Dichtband besteht aus Polytetrafluorethylen (PTFE). Vorteilhafterweise ist das Dichtband aus reinem expandiertem Polytetrafluorethylen (ePTFE) ausgebildet, vorzugsweise als dichte Folie oder als mikroporöse Struktur. Das Dichtband ist bevorzugt eine Membranfolie, insbesondere eine gereckte, fibrilierte ePTFE-Membran, wie sie auch für Laminate verwendet wird. Gemäß einer alternativen Ausführungsform der Erfindung besteht das Dichtband aus einer LD-PTFE Folie, die nicht gereckt bzw. expandiert und auch nicht stabilisiert ist.

Durch die Verwendung von reinem PTFE-Material für das Dichtband ergibt sich der Vorteil, dass man ein chemisch und thermisch sehr stabiles Material nutzt, das keine Limitierung für die Einsatzbedingungen des Filters verursacht. Dadurch unterscheidet sich das Dichtband des erfindungsgemäßen Filters von herkömmlichen Nahtabdichtungsbändern, die in der Regel mehrlagig aufgebaut sind und eine schmelzbare Schicht mit einem vergleichsweise niedrigen Schmelzpunkt (beispielsweise 130 °C) aufweisen. Über diese schmelzbare Schicht können die herkömmlichen Nahtabdichtungsbänder auf einen Filter aufgeschmolzen werden und fest mit diesem verbunden werden. Diese Verbindung ist allerdings nur bis zu dem Schmelzpunkt der schmelzbaren Schicht stabil, so dass die entsprechenden Filter lediglich unterhalb dieses Schmelzpunktes betrieben werden können. Bei höheren Temperaturen lassen sich derartige Filter nicht verwenden. Die Schmelzschicht ist häufig auch chemisch anfällig, so dass der Einsatzbereich derartiger Filter weiter auf chemisch wenig aggressive Umgebungen eingeschränkt wird.

Das Dichtband des erfindungsgemäßen Filters weist vorzugsweise eine Dicke im Bereich von 5 µm bis 200 µm auf, besonders bevorzugt in dem Bereich von 50 µm bis 100 µm. Das Dichtband ist vorteilhafterweise so ausgebildet und angeordnet, dass es beidseitig 3 mm bis 5 mm über den abzudichtenden Nahtbereich hinausreicht. Das Dichtband weist vorzugsweise eine Breite im Bereich von 20 mm bis 30 mm auf.

Das flächige Filtermedium weist vorzugsweise eine Ausrüstung auf. Durch eine derartige Ausrüstung kann die Haftung des Dichtbands auf dem Filtermedium erhöht werden. Insbesondere, wenn das Filtermedium aus nicht schmelzbaren oder zumindest nicht ausreichend erweichenden Polymeren oder beispielsweise Glasmaterialien besteht, ist es vorteilhaft, wenn das Filtermedium mit einer Ausrüstung versehen wird, die dann gewissermaßen als Kleber für das Dichtband dient. Besonders bevorzugt wird eine PTFE- oder Fluorpolymer-basierte Ausrüstung verwendet.

Beim erfindungsgemäßen Filter für die industrielle Entstaubung ist eine Haftung des Dichtbandes auf dem Nahtbereich vorzugsweise durch Verpressung des Dichtbandes mit dem flächigen Filtermedium mit Druck und je nach Material und Arbeitsgeschwindigkeit bei erhöhten Temperaturen erzielbar. Der Walzenandruck beträgt z.B. bis zu etwa 7 bar, wobei der Druck auf das Material z.B. über einen Spalt festgelegt wird, der sich an der Dicke des zugeführten Materials orientiert; er liegt z.B. im Bereich von etwa 1 N/mm² bis etwa 100 N/mm². Die erhöhten Temperaturen können z.B. im Bereich von etwa 350 °C bis etwa 600 °C liegen. Beim Verpressen des Dichtbandes mit dem flächigen Filtermedium werden Dichtband und Filtermedium in dem abzudichtenden Bereich vorteilhafterweise auf eine Temperatur erwärmt, bei der sowohl das Dichtband als auch Materialanteile des flächigen Filtermediums, wie beispielsweise dessen Ausrüstung, zu schmelzen beginnen oder zumindest leicht erweicht werden. Damit lässt sich selbst bei einem aus reinem PTFE bestehenden Dichtband eine sichere Haftung des Dichtbandes auf dem flächigen Filtermedium erzielen.

Vorzugsweise weist der Filterkörper des erfindungsgemäßen Filters für die industrielle Entstaubung eine Fügestelle auf, an der mindestens zwei Lagen des flächigen Filtermediums aneinandergefügt sind, wobei das Dichtband so auf der Fügestelle angeordnet und aufgebracht ist, dass es die Fügestelle partikeldicht abdeckt.

Das erfindungsgemäße Verfahren zur Herstellung eines Filters für die industrielle Entstaubung weist folgende Schritte auf: Bilden eines Filterkörpers aus einem flächigen Filtermedium; Vernähen von mindestens zwei Lagen des flächigen Filtermediums in einem Nahtbereich; Anordnen eines Dichtbandes auf dem Nahtbereich; Verpressen des Dichtbandes mit dem flächigen Filtermedium mit Druck und bei erhöhter Temperatur derart, dass das Dichtband auf dem Nahtbereich haftet. Vorzugsweise wird das Dichtband so angeordnet, dass es zusätzlich zu dem Nahtbereich auch eine Fügestelle abdeckt, an der zwei Lagen des flächigen Filtermediums aufeinander liegend zusammengefügt sind. Durch das Dichtband wird dann erfindungsgemäß sowohl der Nahtbereich, als auch die Fügestelle abgedichtet.

Bei dem erfindungsgemäßen Verfahren besteht das Dichtband aus Polytetrafluorethylen. Vorteilhafterweise wird der Schritt des Verpressens des Dichtbandes mit dem flächigen Filtermedium mittels einer Kalandervorrichtung ausgeführt. Die Kalandervorrichtung weist vorzugsweise eine gestufte Walzengeometrie auf.

Eine geeignete Kalandervorrichtung zur Herstellung eines Filters für die industrielle Entstaubung weist eine äußere Walze und eine innere Walze auf, die als Stützwalze ausgebildet ist, wobei die äußere Walze eine gestufte Walzengeometrie aufweist und gleichmäßig beheizbar ausgebildet ist.

Beide Walzen können gestuft oder glatt ausgeformt sein und eine der Nahtform entsprechende Ausformung aufweisen. Beide Walzen können auch beheizbar ausgeführt sein, um z.B. auch auf der Rückseite des Filters ein Dichtband anzubringen.

Im Nahtbereich weist der Filterkörper in der Regel eine größere Dicke auf als außerhalb des Nahtbereichs, da im Nahtbereich meist mindestens zwei Lagen des flächigen Filtermediums übereinandergelegt sind. Wenn die gestufte Walzengeometrie der äußeren Walze an die Form und Größe des Nahtbereichs angepasst ist, ist es möglich, durch die äußere Walze einen gleichmäßigen Druck im Nahtbereich und außerhalb des Nahtbereichs auf den Filterkörper aufzubringen. Damit kann das Dichtband über einen weiten Bereich mit einem gleichmäßigen Druck auf das Filtermedium aufgepresst werden. Wenn das Dichtband durch die äußere Walze auf das Filtermedium gepresst wird und die äußere Walze gleichmäßig beheizbar ausgebildet ist, kann beim Anpressen zudem die Temperatur des Dichtbandes erhöht werden. Dadurch kann eine bessere Haftung des Dichtbandes erzielt werden. Die äußere Walze ist vorzugsweise auf eine Temperatur von mindestens 200 °C gleichmäßig beheizbar und besonders bevorzugt auf eine Temperatur von bis zu 600 °C.

Gemäß einem zusätzlichen oder alternativen Aspekt sind die innere und die äußere Walze nur noch teilweise anwendbar, da dann die Stützwalze auch unterhalb des Schlauchkörpers angebracht werden kann und nicht zwingend im Schlauchkörper. Außerdem ist es auch möglich, eine zweite beheizte Walze zu verwenden, die dann auf der Unterseite ein zweites Band synchron aufträgt und zum Anhaften bringt.

Die Kalandervorrichtung ist vorzugsweise so ausgebildet, dass sie alleinstehend einsetzbar ist oder nachgeschaltet an den Näharm einer Nähmaschine anbaubar ist, so dass das Herstellen einer Naht an einem Filter synchron mit dem Zuführen und Aufpressen eines Dichtbandes vorzugsweise bei den üblichen Nähgeschwindigkeiten von 6 m/min bis 15 m/min erfolgen kann.

Bei der Kalandervorrichtung zur Herstellung eines Filters für die industrielle Entstaubung weist die innere Walze vorzugsweise eine Härte auf, die gleich ist zu oder geringer ist als die Härte der äußeren Walze. Dadurch können insbesondere etwaige Ungleichmäßigkeiten in der Dicke des Filtermediums durch eine Verformung der inneren Walze ausgeglichen werden. Die innere Walze weist vorteilhafterweise eine Härte von etwa 70 Shore A auf.

Denkbar ist auch, dass die innere Walze mit einer geringeren Härte als dieser und/oder mehrschichtig ausgebildet ist, z.B. mit 40 Shore oder kombiniert mit 40 Shore außen und 70 Shore innen.

Die äußere Walze ist vorzugsweise aus Stahl ausgebildet und die innere Walze vorzugsweise aus Silikon. Vorteilhafterweise weist auch die innere Walze eine gestufte Walzengeometrie auf. Dann lässt sich die Form der äußeren Walze und die der inneren Walze insbesondere bei besonders dicken Nahtbereichen gut an die Form des Nahtbereichs anpassen.

Die Kalandervorrichtung ist vorzugsweise so ausgebildet, dass sie einseitig zu öffnen ist. Dies hat den Vorteil, dass dann der Bereich des Filters, der mit dem Dichtband abgedichtet werden soll, seitlich in die Kalandervorrichtung eingeführt werden kann. Damit lassen sich dann auch Nähte im Kragenbereich eines Filterschlauchs, insbesondere auch parallel zur Randkante des Filterschlauchs angeordnete Nähte, mit einem Dichtband abdichten.

Nachfolgend werden bevorzugte Ausführungsformen der vorliegenden Erfindung anhand von Figuren näher beschrieben.

Es zeigen:
Figur 1a eine perspektivische Darstellung eines herkömmlichen Filterschlauchs mit einem aus einem flächigen Filtermedium gebildeten Filterkörper;
Figur 1b eine perspektivische Darstellung eines erfindungsgemäßen Filters in Form eines Filterschlachs mit durch Dichtbänder abgedichteten Nahtbereichen;
Figur 2a einen Ausschnitt aus einem Filterkörper eines herkömmlichen Filters, bei dem zwei Lagen eines flächigen Filtermediums durch eine einfache Naht miteinander verbunden sind;
Figur 2b einen Ausschnitt aus einem Filterkörper eines herkömmlichen Filters, bei dem zwei Lagen eines flächigen Filtermediums durch eine doppelte Kappnaht miteinander verbunden sind;
Figur 3a einen Ausschnitt aus einem erfindungsgemäßen Filter, bei dem ein Dichtband einen Nahtbereich abdeckt;
Figur 3b einen Ausschnitt aus einem erfindungsgemäßen Filter, bei dem ein Dichtband eine doppelte Kappnaht abdeckt;
Figur 4a einen Ausschnitt aus einem erfindungsgemäßen Filter, bei dem ein Dichtband einen Nahtbereich und eine Fügestelle abdeckt;
Figur 4b einen Ausschnitt aus einem erfindungsgemäßen Filter, bei dem ein Dichtband eine doppelte Kappnaht und eine Fügestelle abdeckt;
Figur 5a eine Schnittdarstellung durch die äußere Walze und die innere Walze einer Kalandervorrichtung;
Figur 5b eine Schnittdarstellung durch die äußere Walze und die innere Walze einer Kalandervorrichtung, wobei sowohl die äußere Walze als auch die innere Walze eine gestufte Walzengeometrie aufweist;
Figur 5c eine Schnittdarstellung durch die erste Walze und die zweite Walze einer Kalandervorrichtung, wobei die erste Walze eine Nut aufweist und ein Filter in einer doppellagigen Anordnung zwischen den Walzen geführt wird.

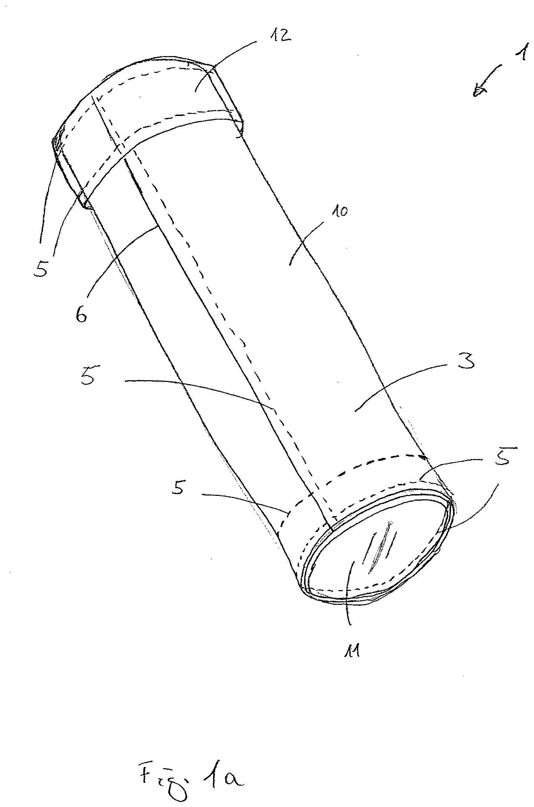

Figur 1a zeigt einen herkömmlichen Filter 1 für die industrielle Entstaubung in Form eines Filterschlauchs. Dieser Filterschlauch weist einen Filterkörper 3 auf, der aus einem flächigen Filtermedium gebildet ist. Der Filterkörper 3 ist zylinderförmig ausgebildet und weist einen Zylindermantel bzw. eine Wand 10 auf, einen Boden 11 und einen Kragenbereich 12. Die Wand 10 ist aus einem rechteckigen Stück eines flächigen Filtermediums gebildet, von dem zwei gegenüberliegende Kanten in einem Überlappungsbereich übereinandergelegt sind und in einem Nahtbereich 5 durch eine Naht miteinander verbunden sind. Der Boden 11 ist hier z.B. kreisförmig ausgebildet und mit der Wand 10 ebenfalls durch eine Naht in einem Nahtbereich 5 verbunden, die Kreisform ist jedoch nicht zwingend. An dem dem Boden 11 gegenüberliegenden Ende des Zylinders ist der Filterkörper 3 offen und weist in diesem Bereich einen Kragenbereich 12 auf, der durch eine zusätzliche Schicht des flächigen Filtermediums gebildet wird, die mit der Wand 10 ebenfalls durch Nähte in einem Nahtbereich 5 verbunden ist. Die in den Nahtbereichen 5 vorhandenen Nadeldurchstiche können zu unkontrollierten Undichtigkeiten des Filters 1 führen.

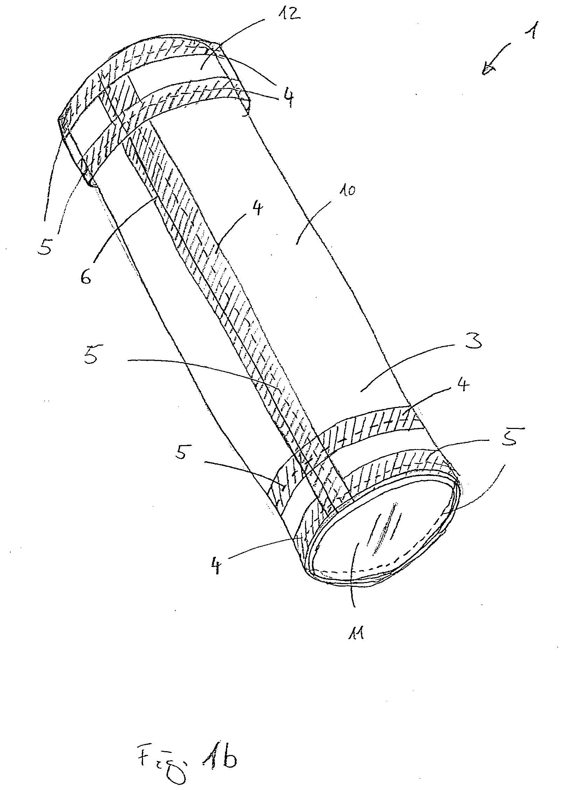

Figur 1b zeigt einen erfindungsgemäßen Filter 1, der sich von dem in Figur 1a gezeigten Filter dadurch unterscheidet, dass er Dichtbänder 4 aufweist, die so auf den Nahtbereichen 5 angeordnet und mit dem flächigen Filtermedium verbunden sind, dass ein Durchtritt von Partikeln durch die von den Nadeldurchstichen gebildeten Durchtrittskanäle verhindert wird.

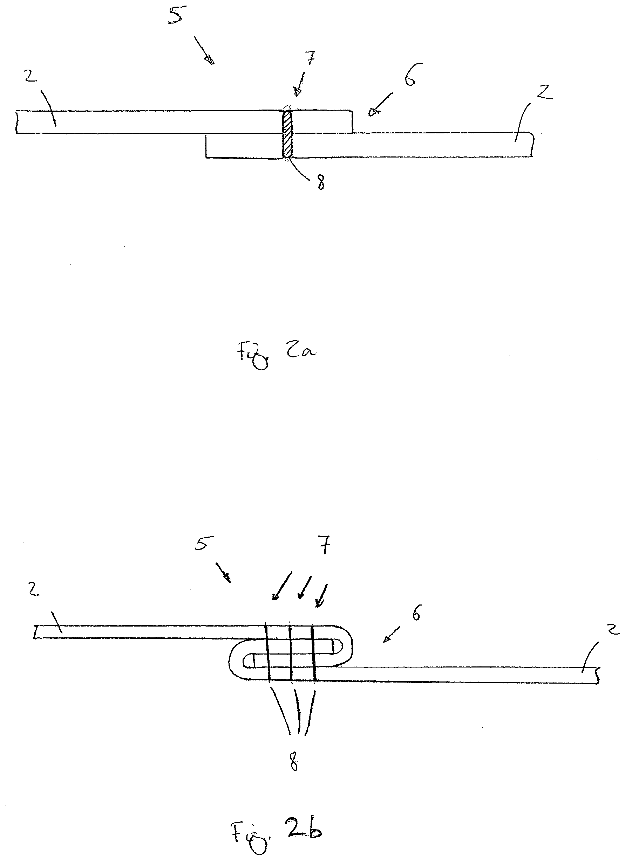

In Figur 2a ist ein Ausschnitt aus einem herkömmlichen Filter mit einem Nahtbereich 5 gezeigt. Dabei sind in dem Nahtbereich 5 zwei Lagen eines flächigen Filtermediums 2 übereinandergelegt, sodass sich eine Fügestelle 6 ergibt. In Figur 2a ist eine Einfachnaht dargestellt. In der Praxis werden dagegen meist Dreifachnähte eingesetzt, insbesondere bei Filterschläuchen, die durch das Pulse Jet-Verfahren gereinigt werden. Der Nahtbereich 5 weist insbesondere bei einer Dreifachnaht eine Vielzahl von Durchtrittskanälen 7 auf, durch die ein Nähfaden 8 geführt ist. Bei einem derartigen Filter besteht die Gefahr, dass Partikeln durch den Durchtrittskanal 7 von der einen Seite des Filters auf die andere Seite gelangen, insbesondere von der Rohgasseite auf die Reingasseite. Die Naht erzeugt also eine Undichtigkeit in dem Filter, die sich nicht oder nur schwer kontrollieren lässt.

Figur 2b zeigt einen Ausschnitt aus einem herkömmlichen Filter, bei dem zwei Lagen eines flächigen Filtermediums 2 durch eine doppelte Kappnaht miteinander verbunden sind, wie dies meist bei Filtern mit Glasgewebe der Fall ist. In dem Nahtbereich 5 weist der Filter die vierfache Stärke des flächigen Filtermediums 2 auf. Die Dicke des Filterkörpers im Nahtbereich 5 unterscheidet sich also stark von der Dicke des Filterkörpers außerhalb des Nahtbereiches 5. Die beiden Lagen des flächigen Filtermediums 2 sind in der doppelten Kappnaht durch eine Dreifachnaht miteinander verbunden. Auch bei der doppelten Kappnaht entstehen somit Durchtrittskanäle 7, durch die Partikeln von der Rohgasseite auf die Reingasseite gelangen können.

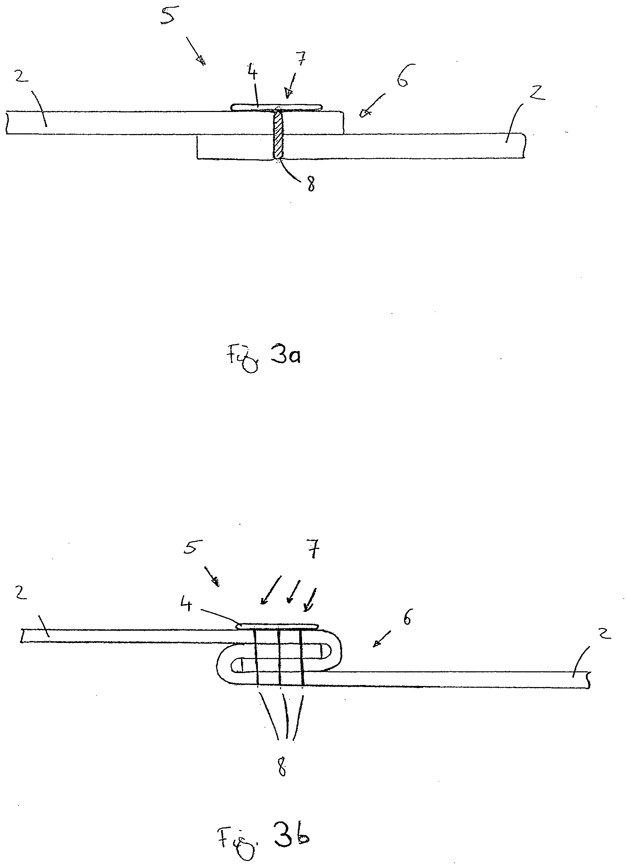

In Figur 3a ist ein Ausschnitt aus einem erfindungsgemäßen Filter nach einer bevorzugten Ausführungsform gezeigt. Dieser erfindungsgemäße Filter unterscheidet sich von dem in Figur 2a gezeigten Filter dadurch, dass der Nahtbereich 5 durch ein Dichtband 4 abgedeckt ist. Dieses Dichtband 4 ist so auf dem Nahtbereich 5 angeordnet und mit dem flächigen Filtermedium 2 verbunden, dass ein Durchtritt von Partikeln durch die Durchtrittskanäle 7 verhindert wird. Bei der in Figur 3a gezeigten Ausführungsform des erfindungsgemäßen Filters weist der Filterkörper in dem gesamten Bereich, der von dem Dichtband 4 abgedeckt wird, eine konstante Dicke auf, nämlich die doppelte Dicke des einfachen flächigen Filtermediums 2. Dadurch ist es besonders einfach, das Dichtband 4 bei hohem Druck auf den Filterkörper zu pressen.

Figur 3b zeigt eine weitere bevorzugte Ausführungsform des erfindungsgemäßen Filters, die sich von dem in Figur 2b gezeigten Filter dadurch unterscheidet, dass ein Dichtband 4 auf dem Nahtbereich 5 so angeordnet und mit dem flächigen Filtermedium 2 verbunden ist, dass ein Durchtritt von Partikeln durch die Durchtrittskanäle 7 verhindert wird. Auch hier weist der Filterkörper in dem gesamten Bereich, der von dem Dichtband 4 bedeckt wird, eine konstante Dicke auf. Da die beiden Lagen des flächigen Filtermediums 2 in einer doppelten Kappnaht miteinander verbunden sind, weist dieser Bereich die vierfache Stärke des einfachen flächigen Filtermediums 2 auf. Bei einem derartig großen Dickenunterschied des Filterkörpers im Nahtbereich 5 und außerhalb des Nahtbereichs 5 ist es besonders vorteilhaft, wenn das Dichtband 4 nur auf dem Nahtbereich 5 angeordnet wird, da es nicht trivial ist, das Dichtband 4 mit gleichmäßig hohem Druck auf einen Filterkörper zu pressen, dessen Dicke stark variiert.

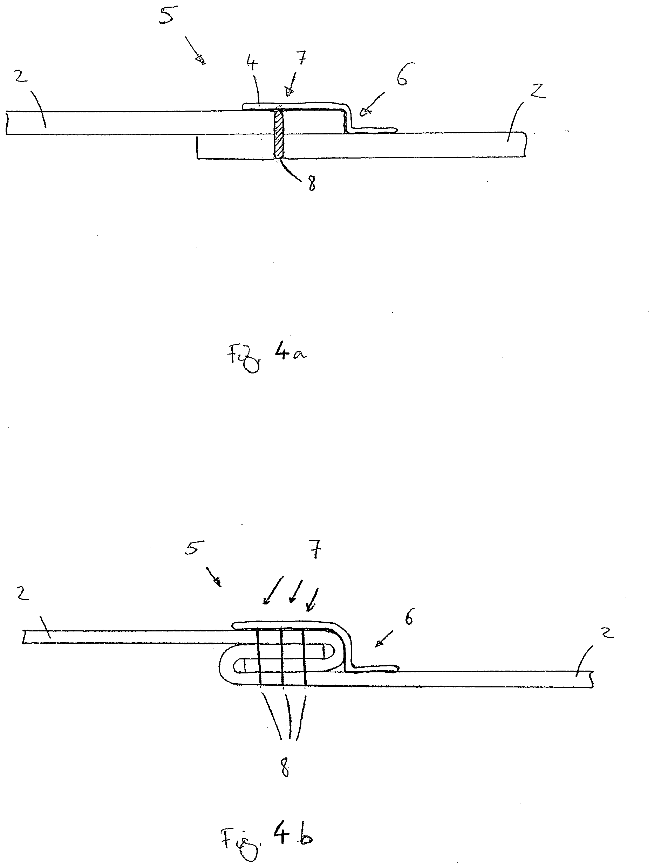

Figur 4a zeigt einen Ausschnitt aus einem erfindungsgemäßen Filter gemäß einer weiteren bevorzugten Ausführungsform. Bei diesem Filter sind wieder zwei Lagen eines flächigen Filtermediums 2 durch eine einfache Naht in einem Nahtbereich 5 miteinander verbunden. Im Überlappungsbereich der beiden Lagen des flächigen Filtermediums 2 weist der Filter eine Fügestelle 6 auf. Im Nahtbereich 5 ist eine Vielzahl von Durchtrittskanälen 7 angeordnet, durch die ein Nähfaden 8 geführt ist. Der erfindungsgemäße Filter weist außerdem ein Dichtband 4 auf, das sowohl den Nahtbereich 5 als auch die Fügestelle abdeckt. Das Dichtband 4 wurde mit Druck und bei erhöhter Temperatur so lange auf das flächige Filtermedium 2 gepresst, dass es darauf haftet. Dadurch, dass zusätzlich zu dem Nahtbereich 5 auch die Fügestelle 6 durch das Dichtband 4 abgedeckt wird, wird nicht nur verhindert, dass Partikeln durch die Durchtrittskanäle 7 an dem Nähfaden 8 vorbei von der Rohgasseite auf die Reingasseite gelangen, sondern auch, dass Partikeln durch die Fügestelle 6 von der Rohgasseite auf die Reingasseite gelangen. Ohne eine derartige Anordnung des Dichtbandes 4 besteht insbesondere die Gefahr, dass Partikeln über die Fügestelle 6 zwischen die beiden Lagen des flächigen Filtermediums 2 und von dort in den Durchtrittskanal 7 gelangen. Die in Figur 4a gezeigte Anordnung des Dichtbandes 4 hat also gegenüber der in Figur 3a gezeigten den Vorteil, dass zusätzlich die Fügestelle 6 abgedichtet wird. Allerdings wird das Aufbringen des Dichtbandes 4 auf den Filterkörper erschwert, da nunmehr die Dicke des Filterkörpers in dem Bereich, in dem das Dichtband 4 angebracht wird, variiert. Die Dickenänderung im Bereich des Dichtbands 4 ist jedoch nicht besonders ausgeprägt, da die beiden Lagen des flächigen Filtermediums 2 lediglich durch eine einfache Naht miteinander verbunden sind.

Figur 4b zeigt einen Ausschnitt aus einem erfindungsgemäßen Filter gemäß einer weiteren Ausführungsform. Bei dieser Ausführungsform sind zwei Lagen des flächigen Filtermediums 2 durch eine doppelte Kappnaht in dem Nahtbereich 5 miteinander verbunden. Auch bei der doppelten Kappnaht ergibt sich eine Fügestelle 6, an der die beiden Lagen des flächigen Filtermediums aneinandergefügt sind. Bei diesem Ausführungsbeispiel weist der Filter ein Dichtband 4 auf, das sowohl den Nahtbereich 5 als auch die Fügestelle 6 abdeckt. Hier weist der Filterkörper in dem Bereich, in dem das Dichtband 4 angeordnet ist, eine große Dickenvariation auf. Im Nahtbereich 5 der doppelten Kappnaht ist der Filterkörper viermal so dick wie außerhalb des Nahtbereichs 5. Das Dichtband 4 mit hohem, gleichmäßigem Druck auf den Filterkörper zu pressen, stellt daher eine besondere Herausforderung dar.

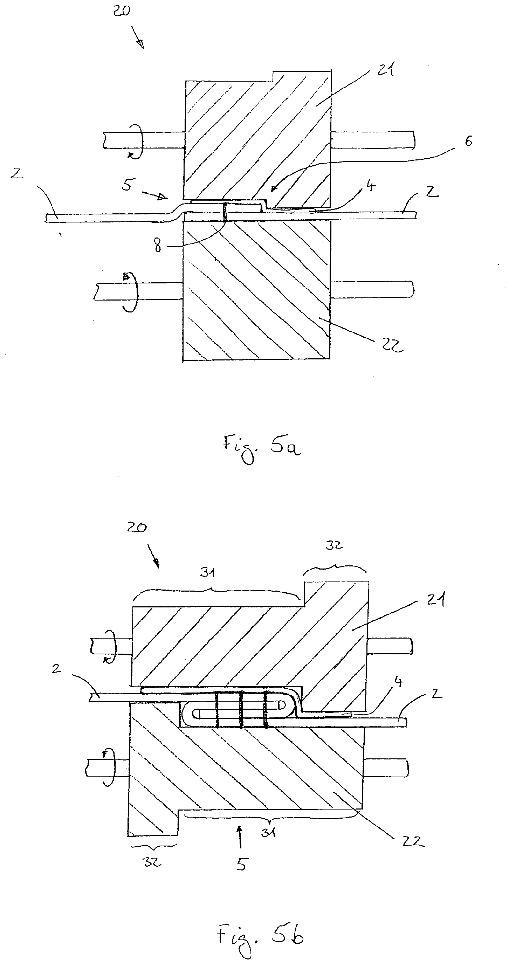

Figur 5a zeigt einen Ausschnitt aus einer Kalandervorrichtung 20 in einer Schnittdarstellung. Die Kalandervorrichtung 20 dient dazu, ein Dichtband 4 auf einen Filter aufzupressen, der ein flächiges Filtermedium 2 umfasst. In Figur 5a sind zwei Lagen des flächigen Filtermediums 2 in einem Überlappungsbereich übereinander gelegt, so dass sich eine Fügestelle 6 ergibt. Die beiden Lagen des flächigen Filtermediums 2 sind durch eine einfache Naht mit einem Nähfaden 8 in einem Nahtbereich 5 miteinander verbunden. Mit der in Figur 5a gezeigten Kalandervorrichtung lässt sich das Dichtband 4 mit gleichmäßigem Druck im Nahtbereich 5 und im seitlich daran angrenzenden Bereich so auf das flächige Filtermedium 2 pressen, dass zusätzlich zu dem Nahtbereich 5 auch die Fügestelle 6 durch das Dichtband 4 abgedichtet wird. Die Kalandervorrichtung 20 weist eine äußere Walze 21 und eine innere Walze 22 auf. Die innere Walze 22 ist als Stützwalze ausgebildet. Auf ihr wird das flächige Filtermedium 2 geführt. Die äußere Walze 21 weist eine gestufte Walzengeometrie auf. Die äußere Walze 21 weist also keinen konstanten Durchmesser auf, sondern der Durchmesser der äußeren Walze 21 ändert sich entlang ihrer Längsachse stufenartig. Dadurch wird es möglich, das Dichtband 4 sowohl im Nahtbereich 5, in dem die Dicke des Filters im Wesentlichen der doppelten Dicke des flächigen Filtermediums 2 entspricht, als auch in dem seitlich daran angrenzenden Bereich, in dem die Dicke des Filters der einfachen Dicke des flächigen Filtermediums 2 entspricht, mit konstantem Druck auf den Filter aufzupressen. Die äußere Walze 21 ist gleichmäßig beheizbar ausgebildet, so dass das Aufpressen des Dichtbandes 4 auf den Filter bei erhöhter Temperatur erfolgen kann. Dadurch kann die Haftung des Dichtbandes 4 auf dem Filter verbessert werden.

Figur 5b zeigt einen Ausschnitt aus einer Kalandervorrichtung 20 gemäß einer weiteren bevorzugten Ausführungsform. Bei dieser Kalandervorrichtung 20 weist sowohl die äußere Walze 21, als auch die innere Walze 22 eine gestufte Walzengeometrie auf. Jede der beiden Walzen weist einen ersten Bereich 31 mit einem ersten Durchmesser und einen zweiten Bereich 32 mit einem zweiten Durchmesser auf, wobei der zweite Durchmesser größer ist als der erste Durchmesser. Die beiden Walzen sind entgegengesetzt orieniert zueinander angeordnet. Bei der äußeren Walze 21 befindet sich der zweite Bereich 32 also beispielsweise wie in Figur 5b dargestellt rechts von dem ersten Bereich 31, wohingegen sich bei der inneren Walze 22 der zweite Bereich 32 links von dem ersten Bereich 31 befindet. Durch eine derartige Orientierung der beiden Walzen lassen sich diese so anordnen, dass sich bei dem zwischen den beiden Walzen liegenden Bereich drei Zonen unterscheiden lassen: Zunächst eine erste Zone, in der dem ersten Bereich 31 der äußeren Walze 21 der zweite Bereich 32 der inneren Walze 22 gegenüber liegt (linke Zone in Figur 5b). Anschließend eine zweite Zone, in der dem ersten Bereich 31 der äußeren Walze 21 der erste Bereich 31 der inneren Walze 22 gegenüber liegt (mittlere Zone in Figur 5b). Schließlich eine dritte Zone, in der dem zweiten Bereich 32 der äußeren Walze 21 der erste Bereich 31 der inneren Walze 22 gegenüber liegt (rechte Zone in Figur 5b). In der ersten und der dritten Zone weisen die beiden Walzen einen geringeren Abstand zueinander auf, als in der zweiten Zone. Besonders vorteilhaft ist es, wenn wie in Figur 5b dargestellt die Abmessung der zweiten Zone an die Abmessung der abzudichtenden Naht angepasst ist, so dass sich der Nahtbereich 5 in der zweiten Zone anordnen lässt und diese im Wesentlichen ausfüllt. Dann kann nämlich das Dichtband 4 mittels der erfindungsgemäßen Kalandervorrichtung 20 sowohl im Nahtbereich 5 als auch in den dem Nahtbereich 5 benachbarten Bereichen mit gleichmäßigem Druck auf das flächige Filtermedium 2 gepresst werden, selbst wenn sich die Dicke des Filters im Nahtbereich 5 stark von der Dicke des Filters außerhalb des Nahtbereichs unterscheidet.

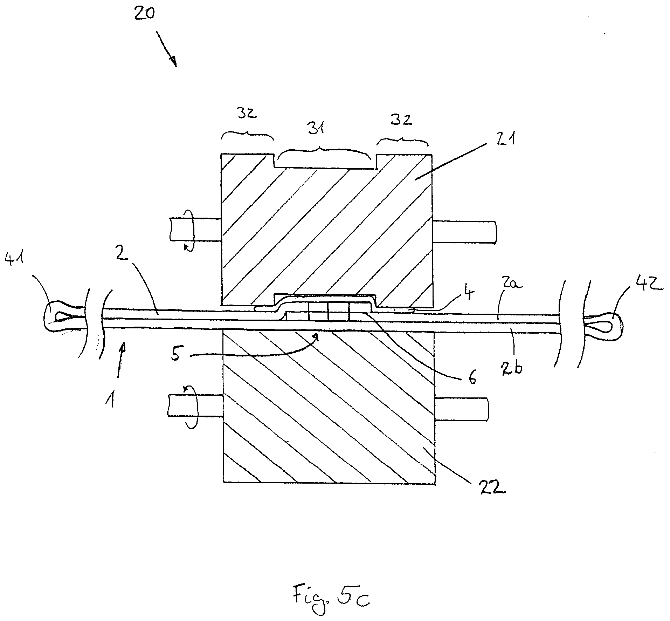

Figur 5c zeigt einen Ausschnitt aus einer Kalandervorrichtung 20 gemäß einer weiteren bevorzugten Ausführungsform. Die Kalandervorrichtung 20 weist eine erste Walze 21 und eine zweite Walze 22 auf. Die erste Walze 21 weist eine Nut auf. In einem zentral angeordneten ersten Bereich 31 weist die erste Walze 21 also einen kleineren Radius auf als in den beiden seitlich an den ersten Bereich 31 angrenzenden zweiten Bereichen 32. Die zweite Walze 22 ist als Stützwalze mit konstantem Radius ausgeführt. Bei der in Figur 5c gezeigten Anordnung wird der aus dem flächigen Filtermedium 2 gebildete Filterschlauch 1 doppellagig zwischen den beiden Walzen 21 und 22 der Kalandervorrichtung 20 hindurchgeführt. Der Filterschlauch 1 ist flach zusammengelegt, so dass eine erste Lage 2a des flächigen Filtermediums 2 auf einer zweiten Lage 2b des flächigen Filtermediums 2 aufliegt. Die beiden Lagen 2a und 2b sind über eine erste Knickzone 41 und eine zweite Knickzone 42 miteinander verbunden. Die doppelt gestufte Geometrie der ersten Walze 21 ist an die Abmessungen des Nahtbereichs 5 angepasst, so dass das Dichtband 4 im Nahtbereich 5 und über die Fügestelle 6 hinweg fest auf die erste Lage 2a des flächigen Filtermediums 2 gepresst werden kann. Die erste Walze 21 ist vorzugsweise als beheizbare Stahlwalze ausgebildet, die zweite Walze 22 vorzugsweise als Silikonwalze.

Die in Figur 5c gezeigte Kalandervorrichtung 20 ist an die Verarbeitung einer Flachnaht angepasst. Zum Abdichten einer Doppelkappnaht muss die Geometrie der ersten Walze 21 angepasst werden, indem die Stufen zwischen erstem Bereich 31 und zweiten Bereichen 32 vergrößert werden. Die in Figur 5c gezeigte Anordnung aus Kalandervorrichtung 20 und Filterschlauch 1 kann erfindungsgemäß auch dazu genutzt werden, zusätzlich zu dem ersten, den Nahtbereich 5 und die Fügestelle 6 abdichtenden Dichtband 4 ein zweites Dichtband (nicht gezeigt) mit dem Filterschlauch 1 zu verpressen. Dieses zweite Dichtband wird vorzugsweise an der Unterseite der zweiten Lage 2b des flächigen Filtermediums 2 gegenüber von dem ersten Dichtband 4 auf das flächige Filtermedium 2 gepresst. Dann wird der Filterschlauch 1 nach dem Nähen und Abdichten vozugsweise so zusammengelegt, dass die beim Zusammenlegen unvermeidlichen Knickzonen in den Bereichen gebildet werden, in denen die Dichtbänder angeordnet sind. Das flächige Filtermedium 2 ist dann in den Knickzonen durch die Dichtbänder zusätzlich geschützt. Bei dieser Variante der erfindungsgemäßen Kalandervorrichtung 20 ist vorzugsweise auch die zweite Walze 22 als beheizbare Stahlwalze ausgebildet.

Bei der in Figur 5c gezeigten Kalandervorrichtung 20 muss der Filterschlauch 1 nicht zwingend doppellagig zwischen den Walzen hindurchgeführt werden. Es ist erfindungsgemäß auch möglich, ähnlich wie in den Figuren 5a und 5b gezeigt, nur eine Lage des flächigen Filtermediums 2 durch die Kalandervorrichtung 20 gemäß Figur 5c zu führen. Ebenso kann bei der Kalandervorrichtung 20 gemäß Figur 5a der Filterschlauch 1 auch doppellagig durch die Kalandervorrichtung 20 geführt werden.

### Bezugszeichenliste:

- 1: Filter
- 2: flächiges Filtermedium
- 2a: erste Lage des flächigen Filtermediums
- 2b: zweite Lage des flächigen Filtermediums
- 3: Filterkörper
- 4: Dichtband
- 5: Nahtbereich
- 6: Fügestelle
- 7: Durchtrittskanal
- 8: Nähfaden
- 10: Wand des Filterschlauchs
- 11: Boden des Filterschlauchs
- 12: Kragenbereich des Filterschlauchs
- 20: Kalandervorrichtung
- 21: äußere/erste Walze
- 22: innere/zweite Walze
- 31: erster Bereich
- 32: zweiter Bereich
- 41: erste Knickzone
- 42: zweite Knickzone

## Patentansprüche

1. Filter (1) für die industrielle Entstaubung mit
einem aus einem flächigen Filtermedium (2) gebildeten Filterkörper (3) und
einem Dichtband (4), das aus Polytetrafluorethylen besteht, wobei der Filterkörper (3) einen Nahtbereich (5) aufweist mit Durchtrittskanälen (7), durch die mindestens ein Nähfaden (8) geführt ist, und
das Dichtband (4) so auf dem Nahtbereich (5) angeordnet und mit dem flächigen Filtermedium (2) verbunden ist, dass ein Durchtritt von Partikeln durch die Durchtrittskanäle (7) verhindert wird.

2. Filter (1) für die industrielle Entstaubung nach Anspruch 1, wobei das Dichtband (4) als dichte Folie oder als mikroporöse Struktur aus reinem expandiertem Polytetrafluorethylen ausgebildet ist.

3. Filter (1) für die industrielle Entstaubung nach einem der vorherigen Ansprüche, wobei das flächige Filtermedium (2) eine Ausrüstung aufweist.

4. Filter (1) für die industrielle Entstaubung nach Anspruch 3, wobei die Ausrüstung Polytetrafluorethylen- oder Fluorpolymer-basiert ist.

5. Filter (1) für die industrielle Entstaubung nach einem der vorherigen Ansprüche, wobei eine Haftung des Dichtbandes (4) auf dem Nahtbereich (5) durch Verpressung des Dichtbandes (4) mit dem flächigen Filtermedium (2) mit Druck und bei erhöhter Temperatur erzielbar ist.

6. Filter (1) für die industrielle Entstaubung nach einem der vorherigen Ansprüche, wobei der Filterkörper (3) eine Fügestelle (6) aufweist, an der mindestens zwei Lagen des flächigen Filtermediums (2) aneinander gefügt sind, und das Dichtband (4) so auf der Fügestelle (6) angeordnet und aufgebracht ist, dass es die Fügestelle (6) partikeldicht abdeckt.

7. Verfahren zur Herstellung eines Filters (1) für die industrielle Entstaubung mit den Schritten:
- Bilden eines Filterkörpers (3) aus einem flächigen Filtermedium (2);
- Vernähen von mindestens zwei Lagen des flächigen Filtermediums (2) in einem Nahtbereich (5);
- Anordnen eines Dichtbandes (4), das aus Polytetrafluorethylen besteht, auf dem Nahtbereich (5);
- Verpressen des Dichtbandes (4) mit dem flächigen Filtermedium (2) mit Druck und bei erhöhter Temperatur derart, dass das Dichtband (4) auf dem Nahtbereich (5) haftet.

8. Verfahren zur Herstellung eines Filters (1) für die industrielle Entstaubung nach Anspruch 7, wobei der Schritt des Verpressens des Dichtbandes (4) mit dem flächigen Filtermedium (2) mittels einer Kalandervorrichtung (20) ausgeführt wird.

9. Verfahren zur Herstellung eines Filters (1) für die industrielle Entstaubung nach Anspruch 8, wobei die Kalandervorrichtung (20) eine gestufte Walzengeometrie aufweist.

## Claims

1. A filter (1) for industrial dedusting, comprising
a filter body (3) formed of a flat filter medium (2) and
a sealing band (4) consisting of polytetrafluoroethylene, wherein
the filter body (3) comprises a seam region (5) with passage channels (7) through which at least one sewing thread (8) is guided, and
the sealing band (4) is arranged on the seam region (5) and connected with the flat filter medium (2) such that a passage of particles through the passage channels (7) is prevented.

2. The filter (1) for industrial dedusting according to claim 1, wherein the sealing band (4) is formed as a dense film or as a microporous structure of pure expanded polytetrafluoroethylene.

3. The filter (1) for industrial dedusting according to any of the preceding claims, wherein the flat filter medium (2) comprises a finishing.

4. The filter (1) for industrial dedusting according to claim 3, wherein the finishing is polytetrafluoroethylene- or fluoropolymer-based.

5. The filter (1) for industrial dedusting according to any of the preceding claims, wherein adhesion of the sealing band (4) on the seam region (5) can be achieved by grouting the sealing band (4) with the flat filter medium (2) with pressure and at increased temperature.

6. The filter (1) for industrial dedusting according to any of the preceding claims, wherein the filter body (3) comprises a joint (6) at which at least two layers of the flat filter medium (2) are adjoined, and the sealing band (4) is arranged and applied on the joint (6) such that it covers the joint (6) in a particle-tight manner.

7. A method for manufacturing a filter (1) for industrial dedusting, comprising the steps of:
- forming a filter body (3) of a flat filter medium (2);
- sewing up at least two layers of the flat filter medium (2) in a seam region (5);
- arranging a sealing band (4) consisting of polytetrafluoroethylene on the seam region (5);
- grouting the sealing band (4) with the flat filter medium (2) with pressure and at increased temperature such that the sealing band (4) adheres on the seam region (5).

8. The method for manufacturing a filter (1) for industrial dedusting according to claim 7, wherein the step of grouting of the sealing band (4) with the flat filter medium (2) is performed by means of a calender device (20).

9. The method for manufacturing a filter (1) for industrial dedusting according to claim 8, wherein the calender device (20) comprises a stepped roll geometry.

## Revendications

1. Filtre (1) pour le dépoussiérage industriel, comportant
un corps de filtre (3) formé à partir d'un milieu filtrant plan (2) et
une bande d'étanchéité (4) constituée de polytétrafluoroéthylène, dans lequel
le corps de filtre (3) comprend une zone de couture (5) avec des canaux de passage (7), à travers laquelle au moins un fil de couture (8) est guidé, et
la bande d'étanchéité (4) est disposée sur la zone de couture (5) et reliée au milieu filtrant plan (2) de telle sorte qu'un passage de particules à travers les canaux de passage (7) est empêché.

2. Filtre (1) pour le dépoussiérage industriel selon la revendication 1, dans lequel la bande d'étanchéité (4) est réalisée sous forme d'une feuille étanche ou d'une structure microporeuse en polytétrafluoroéthylène expansé pur.

3. Filtre (1) pour le dépoussiérage industriel selon l'une des revendications précédentes, dans lequel le milieu filtrant plan (2) comprend un apprêt.

4. Filtre (1) pour le dépoussiérage industriel selon la revendication 3, dans lequel l'apprêt est à base de polytétrafluoroéthylène ou de fluoropolymère.

5. Filtre (1) pour le dépoussiérage industriel selon l'une des revendications précédentes, dans lequel une adhérence de la bande d'étanchéité (4) sur la zone de couture (5) peut être obtenue par pressage de la bande d'étanchéité (4) avec le milieu filtrant plan (2) sous pression et à haute température.

6. Filtre (1) pour le dépoussiérage industriel selon l'une des revendications précédentes, dans lequel le corps de filtre (3) comprend un joint (6) au niveau duquel au moins deux couches du milieu filtrant plan (2) sont jointes l'une à l'autre, et la bande d'étanchéité (4) est disposée et appliquée sur le joint (6) de telle sorte qu'elle recouvre le joint (6) de manière étanche aux particules.

7. Procédé de fabrication d'un filtre (1) pour le dépoussiérage industriel comprenant les étapes consistant à :
- former un corps de filtre (3) à partir d'un milieu filtrant plan (2) ;
- coudre ensemble au moins deux couches du milieu filtrant plan (2) dans une zone de couture (5) ;
- disposer une bande d'étanchéité (4) constituée de polytétrafluoroéthylène sur la zone de couture (5) ;
- presser la bande d'étanchéité (4) avec le milieu filtrant plan (2) sous pression et à haute température de telle sorte que la bande d'étanchéité (4) adhère à la zone de couture (5).

8. Procédé de fabrication d'un filtre (1) pour le dépoussiérage industriel selon la revendication 7, dans lequel l'étape consistant à presser la bande d'étanchéité (4) avec le milieu filtrant plan (2) est réalisée au moyen d'un dispositif de calandrage (20).

9. Procédé de fabrication d'un filtre (1) pour le dépoussiérage industriel selon la revendication 8, dans lequel le dispositif de calandrage (20) présente une géométrie à rouleaux étagés.
